# EUROPÄISCHE PATENTSCHRIFT

(11) **EP 1 704 688 B1**
(45) Veröffentlichungstag und Bekanntmachung des Hinweises auf die Patenterteilung: **15.08.2007**
(21) Anmeldenummer: 05701425.0
(22) Anmeldetag: 04.01.2005
(51) Int. Cl.: H04L 12/56, H04J 14/08

(54) **VERFAHREN ZUR OPTIMIERTEN ÜBERTRAGUNG VON DATENBURSTS ZWISCHEN EINEM SENDENDEN UND EINEM EMPFANGENEN NETZKNOTEN**
METHOD FOR THE OPTIMISED TRANSMISSION OF DATA BURSTS BETWEEN AN EMITTING AND A RECEIVING NETWORK NODE
PROCEDE POUR LA TRANSMISSION OPTIMISEE DE RAFALES DE DONNEES ENTRE UN NOEUD DE RESEAU EMETTEUR ET UN NOEUD DE RESEAU RECEPTEUR

(30) Priorität: 12.01.2004 DE 102004001691
(43) Veröffentlichungstag der Anmeldung: 27.09.2006
(73) Patentinhaber: SIEMENS AKTIENGESELLSCHAFT, 80333 München (DE)
(72) Erfinder: DE VEGA RODRIGO, Miguel, B-1200 Woluwe St. Lambert Brussels (BE); BEAR CHINEA, Estibaliz, 89073 Ulm (DE)
(86) Internationale Anmeldenummer: PCT/EP2005/050009
(87) Internationale Veröffentlichungsnummer: WO 2005/067224

(56) Entgegenhaltungen:
- EP-A- 1 089 498
- US-A- 5 398 129
- US-A1- 2003 137 972

## Beschreibung

Die Erfindung betrifft ein Verfahren zur optimierten Übertragung von Datenbursts nach dem Oberbegriff des Anspruchs 1.

Bei der Datenübertragung über zukünftige optische Netze wird das sog. Optical Burst-Switching, OBS, angewendet. Bei diesem werden mehrere Datenpakete zu sog. Datenbursts zusammengefasst und anschließend über einen Datenkanal des optischen Netzes übertragen. Jeder Datenkanal entspricht einer bestimmten Wellenlänge eines Wellenlängen-Mutliplexsignals, das eine Vielzahl dieser Kanäle aufweist, über die gleichzeitig Datensignale übertragen werden. Über jeden Datenkanal können unterschiedliche Nachrichten von verschiedenen Quellen übertragen werden. Bei höherem Verkehrsaufkommen kommt es zu größeren Verzögerung bei der Aussendung von Datenbursts, da zu ihrer Übertragung weniger freie Zeitschlitze zur Verfügung stehen. In diesen Netzen ist die optimale Ausnutzung der zu verfügenden Übertragungskapazität und damit einer Verringerung der Blockierungswahrscheinlichkeit ein wichtiges Ziel. Die Blockierungswahrscheinlichkeit wird durch ein "Two-Way-Reservation-OBS-Network", 2WR-OBS, reduziert, bei dem vom sendenden Netzknoten eine Reservierungsanfrage ausgesendet wird und von einem empfangenden Netzknoten die Bestätigung erfolgt, dass der Verbindungsweg frei ist.

Beim sogenannten λ-Switching, bei dem mehrere Wellenlängen (Kanäle) zur Verfügung stehen, ist die Schaltgranularität eine Wellenlänge. Folglich wird auch bei niedrigem Verkehrsaufkommen ein vollständiger Übertragungskanal belegt. Auch dieses Verfahren ist daher nicht optimal.

Das Grundprinzip des "Optical Burst Switching - OBS" ist in der Patentanmeldung EP1089 498 A2 beschrieben . Mehrere Datenpakete werden jeweils zu einem Burst zusammengefasst, der als optisches Signal zu einem Empfangsknoten übertagen wird, wo er wieder in Datenpakete aufgeteilt wird. Die Anmeldung scheint sich mit Details der Steuerung zu befassen.

Aus dem Patent US 5,398,129 ist ein passives optisches Netz bekannt, bei dem Daten von einer Zentrale zu mehreren Teilnehmern im Broadcast-Zeitmultiplexbetrieb gesendet werden, während die Teilnehmer im von der Zentrale gesteuerten Burstbetrieb an die Zentrale Daten senden. Dieses hat mit dem als "Burst Switching" bezeichnetem Verfahren wenig zu tun, insbesondere treten hier auch keine Blockierungen in Schalteinrichtungen auf, da zum Herstellen von Verbindungen allein die Zentrale zuständig ist.

Aufgabe der Erfindung ist es, die Übertragungskapazität eines insbesondere optischen Datennetzes, insbesondere eines optischen Datennetzes, zu verbessern.

Diese Aufgabe wird durch ein Verfahren mit den Merkmalen des Anspruchs 1 gelöst.

Weiterbildungen des Verfahrens sind in den Unteransprüchen angegeben.

Der wesentliche Vorteil ergibt sich durch die Reduzierung der Wartezeiten (GAPs) zwischen den ausgesendeten Datenbursts. Der sendende Netzknoten erhält Information, ab wann eine mögliche Blockierung aufgehoben wird bzw. der Verbindungsweg frei ist. Daher kann ein Datenburst nach dem anderen ohne dazwischenliegende Wartezeit übertragen werden. Das Verfahren lässt sich allgemein anwenden und beispielsweise bei den bekannten OBS-Reservierungsmethoden HORIZON und JET und einsetzen.

Ausführungsbeispiele der Erfindung werden anhand von Figuren näher beschrieben.

Es zeigen
Figur 1 die Burst-Übertragung nach einem bekannten Verfahren,
Figur 2 die Burst-Übertragung nach dem neuen Verfahren,
Figur 3 ein optisches Datennetz und
Figur 4 ein Zeitdiagramm zum JET-Algorithmus.

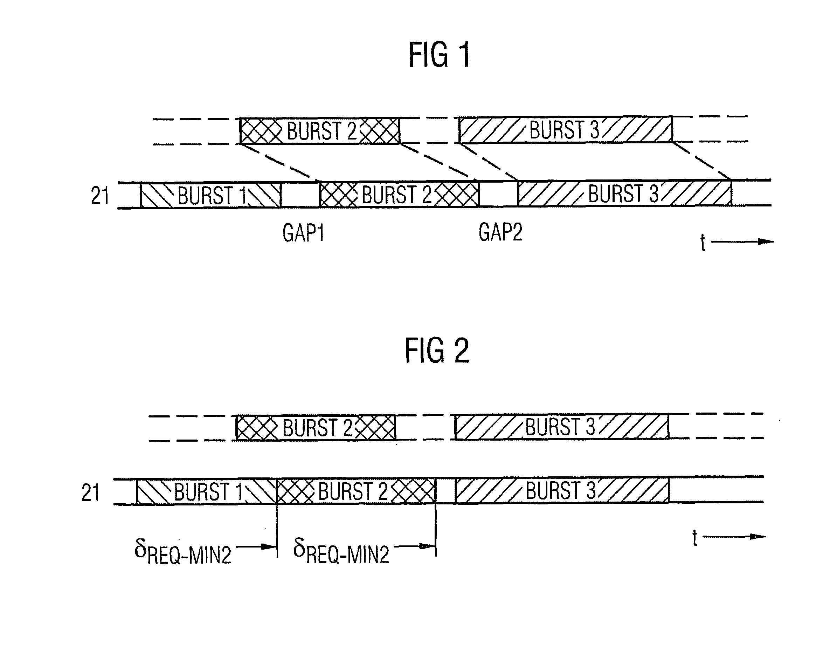

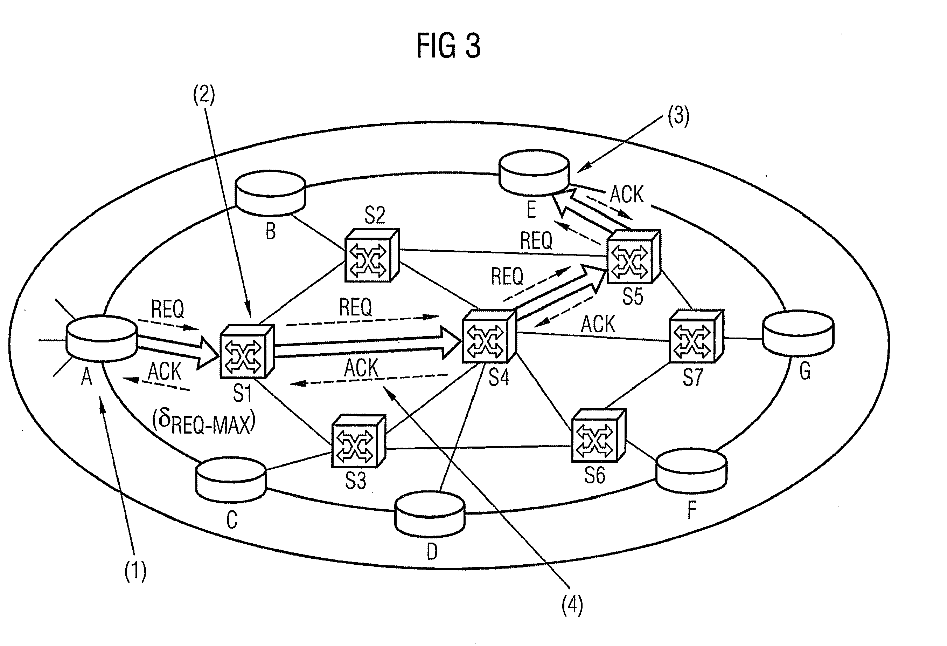

Zunächst soll das übliche "Two-Way-Reservation-OBS" anhand von Figur 1 beschrieben werden. Diese Figur zeigt die Aussendung von 3 aufeinanderfolgenden Datenbursts, BURST1 bis BURST3, über einen mit λ1 bezeichneten Datenkanal. Bei dem üblichen Verfahren wird von dem sendenden Endknoten ein Header mit einer Reservierungsanfrage (REQ - Figur 3) ausgesendet, der im Allgemeinen über mehrere Schalteinrichtungen zum empfangenen Endknoten gelangt. Ist der Verbindungsweg frei, so erhält der sendende Endknoten auf seine Anfrage hin nach einer Wartezeit ein Bestätigungssignal (ACK - Acknowledge, Figur 3) und kann anschließend seinen Datenburst aussenden. Nachdem entsprechend Figur 1, untere Zeile der erste Datenburst BURST1 ausgesendet ist, erfolgt in einem üblichen "Two-Way-Reservation-OBS" die Aussendung einer Reservierungsanfrage im nächsten Header durch den sendenden Endknoten und daraufhin der Empfang eines zugehörigen Bestätigungssignals, worauf - nach dem Ende des ersten Datenbursts und einer ungenutzten Wartezeit GAP1 - ein zweiter Datenburst BURST2 gesendet wird. Die obere Zeile in der Figur 1 zeigt die dabei immer die frühest mögliche Aussendung des Datenbursts. Mit dem ausgesendeten zweiten Datenburst BURST 2 überlappt der dritte Datenburst BURST3 (obere Zeile), der wiederum erst nach einer weiteren Wartezeit GAP2 ausgesendet werden kann. Zwischen den Datenbursts tritt folglich jedes mal eine Wartezeit GAP1, GAP2, ... auf. Diese Wartezeiten entsprechen ungenutzter Übertragungskapazität.

**Figur 2** zeigt die Übertragung der Datenbursts nach der neuen Methode. Bereits während der Übertragung des ersten Datenbursts BURST1 wird dem sendenden Endknoten durch Angabe einer Blockierungszeit δ_{REQ-MIN} mitgeteilt, ab wann keine Blockierung mehr besteht. Die Schalteinrichtungen des Netzes und der empfangende Endknoten sind über die gerade andauernde Blockierungszeit informiert und teilen dies im Bestätigungssignal dem sendenden Endknoten mit. Jetzt weiß der sendende Endknoten aufgrund der Blockierungszeit δ_{REQ-MIN2}, wann eine möglicherweise bestehende Blockierung aufgehoben wird und die Verbindung zu Übertragung des zweiten Datenbursts BURST2 frei ist, hier unmittelbar nach dem Ende des ersten Datenbursts. Die erste Wartezeit GAP1 fällt daher nicht an und der zweite Datenbursts BURST2 wird ohne weitere Verzögerung ausgesendet. Ebenso könnte dritte Datenburst BURST3 unmittelbar nach der Blockierungszeit δ_{REQ-MIN3}, dem Ende der Blockierung durch den zweiten Datenburst BURST2, ausgesendet werden. BURST3 liegt aber zu diesem Zeitpunkt noch nicht vollständig vor (obere Zeile) und wird daher erst dann ausgesendet, wenn er vollständig ist. Die Übertragungskapazität wird durch das neue Verfahren soweit erhöht, dass im dargestellten Beispiel die anfallende Datenmenge problemlos übertragen werden kann. Im Extremfall treten überhaupt keine Wartezeiten mehr auf.

Durch das neue Verfahren kann außerdem der Signalisierungs-Overhead reduziert werden. Wird bei einer üblichen "Two-Way-Reservation" wird der sendende Endknoten über die Bestätigungsinformation ACK (Figur 3), informiert, dass der Übertragungsweg nicht frei ist, so muss der sendende Netzknoten den entsprechenden Header gegebenenfalls mehrfach solange aussenden, bis er durch die Bestätigungsinformation informiert wird, dass der Übertragungsweg frei ist. Diese fortlaufende Signalisierungsinformation wird überflüssig, wenn das erfindungsgemäße Verfahren verwendet wird, bei dem der sendende Endknoten genau weiß, ab wann der Übertragungsweg frei ist und er den nächsten Datenburst aussenden kann.

In **Figur 3** ist ein Datennetz mit verschiedenen Endknoten A bis G dargestellt, die über Schalteinrichtungen S1 bis S7 miteinander verbunden sind. An jedem Endknoten können mehrere Teilnehmer angeschaltet sein, wie dies bei den Endknoten A und E durch Anschlußleitungen symbolisch dargestellt ist. Der Endknoten A will Datenbursts zum Endknoten E übertragen. Er sendet daher zunächst in einem Header eine Reservierungsanfrage (bandwidth reservation request) REQ über die Schalteinrichtungen S1, S4 und S5 an E, die Zeitinformation δ_{REQ} = 0 enthält, was bedeutet, dass der Datenburst sobald wie möglich ausgesendet werden soll. Jede Schalteinrichtung überprüft, ob eine Reservierung von Übertragungskapazität für diesen Datenburst möglich ist. Bei der neuen Methode wird jedoch nicht nur eine positive oder negative Antwort erwartet. Für den Fall, dass die Antwort negativ ist, der Datenburst also nicht sofort gesendet werden kann, enthält die Antwort die als Blockierungszeit bezeichnete Wartezeit δ_{REQ-MIN}, die eine Blockierungsdauer durch andere Burst-Übertragungen angibt und die der zu sendende Datenburst deshalb im Endknoten A noch verbringen muss, bevor er ausgesendet werden kann.

Der Verbindungsaufbau wird nun anhand der Figur 3 schrittweise beschrieben.

In einem ersten Schritt (1) sendet der Endknoten A seine Anfrage REQ in einem Header an E, der - wie bereits erwähnt - die Zeitinformation δ_{REQ} = 0 enthält.

In einem zweiten Schritt (2) überprüft jede von der Übertragung betroffene Schalteinrichtung S1, S4, S5, ob der zu übertragenden Datenburst mit einem gerade übertragenen Datenburst überlappt und nach welcher Zeitspanne δ die Übertragung des aktuellen Datenbursts, die Blockierung, beendet sein wird und eine verfügbare Verbindung A - E hergestellt ist. Die erste betroffene Schalteinrichtung S1 sendet im Header mit der Reservierungs-Anfrage REQ die längste Blockierungszeit δ_{REQ} = max(δ_{REQ}, δ) an die nächste Schalteinrichtung S4 weiter. Dieser Vorgang wiederholt sich in der Schalteinrichtung S4 und den weiteren Schalteinrichtungen, hier nur in der weiteren Schalteinrichtung S5. Jede Schalteinrichtung ermittelt die längste der Blockierungszeiten auf den einzelnen Übertragungsabschnitten und fügt diese in ihren Header ein.

In einem dritten Schritt (3) erreicht die Reservierungsanfrage den Endknoten E, welcher die Blockierungszeit δ_{REQ-MIN} der gesamten Verbindung A - E ermittelt.

Der Endknoten E sendet dann in einem vierten Schritt (4) eine Bestätigung ACK mit dieser längsten Blockierungszeit δ_{REQ-MIN} zum Endknoten A und informiert ihn so, wann Übertragungskapazität zur Verfügung steht und er seinen Datenburst aussenden kann.

Auf den Weg der Bestätigungsinformation ACK durch die Schalteinrichtungen S5, S4 und S1 wird Übertragungskapazität zwischen A und E für den auszusendenden Datenburst reserviert. Die beschriebene Methode wird als HORIZON-Algorithm bezeichnet.

Die Realisierung dieses Verfahrens kann mit unterschiedliche Varianten erfolgen. So können an Stelle einer Kalkulation der längsten Blockierungszeit auch alle in den einzelnen Schalteinrichtungen vorhandenen Blockierungszeiten eingefügt werden, und der empfangende Endknoten E ermittelt die längste Blockierungszeit der Verbindung A - E für den sendenden Endknoten A. Wesentlich bei allen Varianten ist lediglich, dass der sendende Endknoten A eine Bestätigung mit einer Zeitangabe erhält, aus der er die Wartezeit bis zum Aussenden seines Datenburst ermitteln kann.

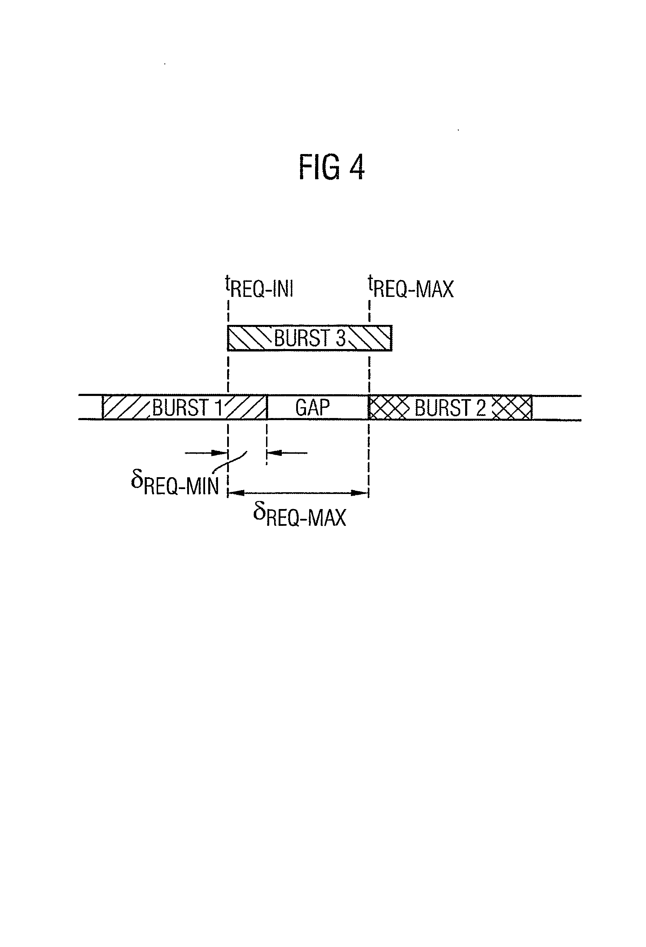

Bei einem anderen Verfahren, dem JET-Algorithm, werden die Zeitpunkte des Datenburst-Beginns und des Datenburst-Endes festgehalten. Hierdurch wird es möglich, zwischen zwei Datenbursts BURST1 und BURST2, für die bereits die Übertragungskapazität reserviert ist, einen weiteren Datenburst BURST3 zu übertragen. **Figur 4** erläutert dieses. Zwischen den Datenbursts BUPST1 und BURST2 liegt eine längere Wartezeit GAP. Wird die Zeit des möglichen Beginns zur Aussendung des Datenbursts BURST 3 mit t_{REQ-INI} bezeichnet und empfängt der sendende Endknoten A die verbleibende Blockierungszeit δ_{REQ-MIN} (in diesem Beispiel entspricht die Blockierungszeit der Verbindung A - E dem Zeitabstand bis zum Ende von BURST1, nach dem die Verbindung frei ist) und die Zeit t_{REQ-MAX} dem Beginn des nächsten Datenbursts BURST3, ab dem die Verbindung nicht mehr verfügbar ist, so kann der sendende Endknoten A die Länge des GAPs kalkulieren GAP_{SIZE} = t_{REQ-MAX} - (t_{REQ-INI} + δ_{REQ-MIN}) kalkulieren, und so feststellen, ob er den weiteren Datenburst BURST3 innerhalb dieser Wartezeit aussenden kann (die freie Verbindungszeit GAP kann auch im Endknoten E usw. berechnet werden oder aufgrund einer relativen Zeitspanne δ_{REQ-MAX} bis zum Ende einer verfügbaren Verbindung ermittelt werden). In Figur 4 ist es nicht der Fall und die Aussendung des Datenbursts BURST3 muss verzögert werden. Liegt keine Reservierung für den Datenburst BURST2 vor, dann wird die Zeit t_{REQ-MAX} auf unendlich gesetzt werden und der Datenburst BURST3 kann nach Ablauf der Zeit δ_{REQ-MIN} ohne weitere Wartezeit ausgesendet werden.

Die Zeiten, ab wann und bis wann eine Übertragung eines Datenbursts möglich ist, können sowohl als Zeitspannen "δ" zu bestimmten Zeitmarken (z.B. Aussendung des Bestätigungssignals) als auch in absoluten Zeitwerten "t" angegeben werden.

## Patentansprüche

1. Verfahren zur Übertragung von Datenbursts (BURST1, BURST2) zwischen einem sendenden Netzknoten (A) und einem empfangenden Netzknoten (E) über Schalteinrichtungen (S1, S4, S5) eines Datennetzes,
**dadurch gekennzeichnet,**
**dass** für eine Verbindung (A - E) die maximale Blockierungszeit der Schalteinrichtungen (S1, S4, S5) bis zur möglichen Aussendung eines folgenden Datenbursts (BURST2) ermittelt wird,
**dass** der sendende Netzknoten (A) Information über diese Blockierungszeit (δ_{REQ-MIN}) erhält und
**dass** der sendende Netzknoten (A) den folgenden Datenburst (BURST2) nach Ablauf dieser Blockierungszeit (δ_{REQ-MIN}) aussendet.

2. Verfahren nach Anspruch 1,
**dadurch gekennzeichnet,**
**dass** die verbleibende Blockierungszeit (δ_{REQ-MIN}) für die Verbindung (A - E) an den sendenden Netzknoten (A) gesendet wird.

3. Verfahren nach Anspruch 1,
**dadurch gekennzeichnet,**
**dass** anstelle der Blockierungszeit sowohl Information über den Anfang einer möglichen Verbindung zum empfangenden Netzknoten (E) als auch über deren Ende an den sendenden Netzknoten (A) gesendet werden.

4. Verfahren nach Anspruch 3,
**dadurch gekennzeichnet,**
**dass** der Zeitpunkt des Beginns einer verfügbaren Verbindung (A - E) als auch der Endzeitpunkt (t_{REQ-MAX}) der verfügbaren Verbindung an den sendenden Netzknoten (A) übertragen werden.

5. Verfahren nach Anspruch 3,
**dadurch gekennzeichnet,**
**dass** die verbleibende Blockierungszeit (δ_{REQ-MIN}) und die Verbindungszeit (GAP) oder eine Zeitspanne (δ_{REQ-MAX}) bis zum Ende der verfügbaren Verbindung (A - E) an den sendenden Netzknoten (A) übertragen werden.

6. Verfahren nach einem der vorhergehenden Ansprüche,
**dadurch gekennzeichnet,**
**dass** der sendende Netzknoten (A) eine Reservierungsanfrage (REQ) über die Schalteinrichtungen (S1, S4, S5) an den empfangenden Netzknoten (E) sendet.

7. Verfahren nach Anspruch 6,
**dadurch gekennzeichnet,**
**dass** jede Schalteinrichtung (S1, S4, S5) die längste verbleibende Blockierungszeit (δ_{REQ-MIN}) ermittelt und an die nächste Schalteinrichtung (S4, S5) bzw. an den empfangenden Netzknoten (E) weitersendet.

8. Verfahren nach Anspruch 6,
**dadurch gekennzeichnet,**
**dass** der empfangende Endknoten (E) in einem Bestätigungssignal (ACK) die Zeitangaben (δ_{REQ-MIN}, t_{REQ-MAX}, δ_{REQ-MAX}) für eine verfügbare Verbindung (A - E) über die Schalteinrichtungen (S5, S4, S1) an den sendenden Netzknoten (A) sendet und die Schalteinrichtungen (S5, S4, S1) aufgrund dieser Zeitangaben die erforderlichen Reservierungen von Übertragungskapazität vornehmen.

9. Verfahren nach Anspruch 6,
**dadurch gekennzeichnet,**
**dass** in der Reservierungsanfrage (REQ) die gewünschte Zeitspanne (δ_{REQ} = 0) bis zur Aussendung des folgenden Datenbursts (BURST2) gesendet wird.

10. Verfahren nach einem der vorhergehenden Ansprüche,
**dadurch gekennzeichnet,**
**dass** die Datenbursts (BURST1, BURST2) über ein optisches Datennetz übertragen werden.

## Claims

1. Method for transmission of data bursts (BURST1, BURST2) between a sending network node (A) and a receiving network node (E) via switching devices (S1, S4, S5) of a data network,
**characterised in that**
for a connection (A - E) the maximum blocking time of the switching devices (S1, S4, S5) until the possible emission of a following data burst (BURST2) is determined,
the transmitting network node (A) receives information about this blocking time (δ_{REQ-MIN}) and
the transmitting network node (A) emits the following data burst (BURST2) after this blocking time (δ_{REQ-MIN}) has elapsed.

2. Method according to claim 1,
**characterised in that**
the remaining blocking time (δ_{REQ-MIN}) for the connection (A - E) is sent to the transmitting network node (A).

3. Method according to claim 1,
**characterised in that**
instead of the blocking time, information both about the start of a possible connection to the receiving network node (E) and also about its end is sent to the transmitting network node (A) .

4. Method according to claim 3,
**characterised in that**
the point in time of the beginning of an available connection (A - E) and also the end time (t_{REQ-MAX}) of the available connection is transmitted to the transmitting network node (A).

5. Method according to claim 3,
**characterised in that**
the remaining blocking time (δ_{REQ-MIN}) and the connection time (GAP) or a time span (δ_{REQ-MAX}) until the end of the available connection (A - E) is transmitted to the sending network node (A) .

6. Method according to one of the previous claims.
**characterised in that**
the transmitting network node (A) sends a reservation request (REQ) via the switching devices (S1, S4, S5) to the receiving network node (E).

7. Method according to claim 6,
**characterised in that**
each switching device (S1, S4, S5) determines the longest remaining blocking time (δ_{REQ-MIN}) and forwards it to the next switching device (S4, S5) or to the receiving network node (E) .

8. Method according to claim 6,
**characterised in that**
the receiving end node (E) sends in an acknowledgement signal (ACK) the time specifications (δ_{REQ-MIN}, t_{REQ-MAX} δ_{REQ- MAX}) for an available connection (A - E) via the switching devices (S5, S4, S1) to the transmitting network node (A) and the switching devices (S5, S4, S1) undertake the required reservations of transmission capacity as result of these time specifications.

9. Method according to claim 6,
**characterised in that**
the desired time span (δ_{REQ} = 0) until the emission of the following data burst (BURST2) is transmitted in the reservation request (REQ) .

10. Method according to one of the previous claims,
**characterized in that**,
the data bursts (BURST1, BURST2) are transmitted over an optical data network.

## Revendications

1. Procédé de transmission de rafales de données (BURST1, BURST2) entre un noeud de réseau émetteur (A) et un noeud de réseau récepteur (E) par l'intermédiaire de dispositifs de commutation (S1, S4, S5) d'un réseau de données,
**caractérisé en ce**
**que** le temps de blocage maximal des dispositifs de commutation (S1, S4, S5) jusqu'à l'éventuelle émission d'une rafale suivante de données (BURST2) est déterminé pour une liaison (A - E),
en ce que le noeud de réseau émetteur (A) reçoit des informations sur ce temps de blocage (δ_{REQ-MIN}) et
en ce que le noeud de réseau émetteur (A) émet la rafale de données suivante (BURST2) après l'expiration de ce temps de blocage (δ_{REQ-MIN}).

2. Procédé selon la revendication 1,
**caractérisé en ce**
**que** le temps de blocage restant (δ_{REQ-MIN}) pour la liaison (A - E) est émis au noeud de réseau émetteur (A).

3. Procédé selon la revendication 1,
**caractérisé en ce**
**qu'**au lieu du temps de blocage, aussi bien des informations sur le début d'une éventuelle liaison vers le noeud de réseau récepteur (E) que sur sa fin sont émises au noeud de réseau émetteur (A).

4. Procédé selon la revendication 3,
**caractérisé en ce**
**que** le moment du début d'une liaison disponible (A - E) aussi bien que le moment terminal (t_{REQ-MAX}) de la liaison disponible sont transmis au noeud de réseau émetteur (A).

5. Procédé selon la revendication 3,
**caractérisé en ce**
**que** le temps de blocage restant (δ_{REQ-MIN}) et le temps de liaison (GAP) ou un intervalle de temps (δ_{REQ-MAX}) jusqu'à la fin de la liaison disponible (A - E) sont transmis au noeud de réseau émetteur (A).

6. Procédé selon l'une quelconque des revendications précédentes,
**caractérisé en ce**
**que** le noeud de réseau émetteur (A) émet au noeud de réseau récepteur (E) une demande de réservation (REQ) par l'intermédiaire des dispositifs de commutation (S1, S4, S5) .

7. Procédé selon la revendication 6,
**caractérisé en ce**
**que** chaque dispositif de commutation (S1, S4, S5) détermine le temps de blocage (δ_{PEQ-MIN}) restant le plus long et l'achemine au prochain dispositif de commutation (S4, S5) resp. au noeud de réseau récepteur (E).

8. Procédé selon la revendication 6,
**caractérisé en ce**
**que** le noeud de réseau récepteur (E) émet, dans un signal de confirmation (ACK), les indications de temps (δ_{REQ-MIN}, t_{REQ-MAX}, δ_{REQ-MAX}) pour une liaison disponible (A - E) au noeud de réseau émetteur (A) par l'intermédiaire des dispositifs de commutation (S5, S4, S1) et en ce que les dispositifs de commutation (S5, S4, S1) exécutent les réservations nécessaires de capacité de transmission en raison de ces indications de temps.

9. Procédé selon la revendication 6,
**caractérisé en ce**
**que** l'intervalle de temps souhaité (δ_{PEQ} = 0) jusqu'à l'émission de la rafale de données suivante (BURST2) est émis dans la demande de réservation (REQ).

10. Procédé selon l'une quelconque des revendications précédentes,
**caractérisé en ce**
**que** les rafales de données (BURST1, BURST2) sont transmises par l'intermédiaire d'un réseau de données optique.
